# EUROPEAN PATENT SPECIFICATION

(11) **EP 0 534 559 B1**
(45) Date of publication and mention of the grant of the patent: **25.10.2000**
(21) Application number: 92202927.7
(22) Date of filing: 23.09.1992
(51) Int. Cl.: G06K 19/06

(54) **Chip card allowing remote identification**
Chipkarte für die Fernidentifizierung
Carte à circuit intégré pour l'identification à distance

(30) Priority: 24.09.1991 NL 9101608
(43) Date of publication of application: 31.03.1993
(73) Proprietor: N.V. Nederlandsche Apparatenfabriek NEDAP, NL-7141 DE Groenlo (NL)
(72) Inventor: Hogen Esch, Johannes Harm Lukas, NL-7122 ZN Aalten (NL)
(74) Representative: Smulders, Theodorus A.H.J., Ir.

(56) References cited:
- EP-A- 0 309 201
- FR-A- 2 655 737
- PROCEEDINGS IEEE 1987 CUSTOM INTEGRATED CIRCUITS CONFERENCE May 1987, PORTLAND, OREGON pages 684-686 NOLAN and SIEMIATKOWSKI 'A radiation powered single chip eeprom id code transceiver'

## Description

The invention relates to a hybrid chip card suitable for communication with an appropriate reader.

In payments, increasingly use will be made of chip cards, sometimes referred to as "smart cards". These cards comprise an electronic circuit which, in accordance with ISO standard 7816 (ISO = International Standardisation Organisation), is provided with contacts capable of effecting a connection with the external world. These contacts serve for the power supply of the electronic circuit and for the data communication from and to the card. Further, a standard ISO 10536 is in preparation for cards wherein both the power supply and the data transfer occur in contactless manner by means of an electromagnetic field. Here, the same protocol is used as with ISO 7816. In view of the relatively large energy consumption of such cards, however, the distance between the transmitter/receiver and the chip card can in that case be a few millimetres at most. In most cases, the electronic circuit of the above-mentioned cards comprises a microprocessor connected with a memory storing the program for the microprocessor as well as data, which may optionally be modifiable.

An example of a chip card comprising an electronic circuit including a microprocessor and a memory and provided with contacts in accordance with ISO standard 7816 and further provided with coils for contactless data communication and power supply over a short distance has been disclosed in DE-C1-3935364.

Owing to the presence of internal intelligence in such cards in the form of the microprocessor mentioned, it is possible to achieve a high degree of data protection. This can be done with various data encryption techniques, such as a DES algorithm (Data Encryption Standard) or the more modern RSA algorithm as developed at MIT (Massachusetts Institute of Technology).

Different from the above-mentioned cards, which include a microprocessor, are cards which exclusively contain a memory wherein reading or writing occurs directly. These cards, it is true, can contain encoded information, but encryption and decryption of data are not utilised. An example of such a card is the telephone chip card with contacts, which has been introduced in many countries. In addition to the above mentioned cards, there are cards wherein the communication with the external world does not take place through contacts but occurs in a contactless manner. Examples are the contactless identification cards as described, for instance, in applicant's patent NL-C-176404, and in the article "A Radiation Powered Single Chip EEPROM ID Code Transceiver", IEEE Custom Integrated Circuits Conference 1987.

The contents of a memory of this type of cards as disclosed in said article and said patent can be read or written in a contactless manner over a relatively large distance by transferring the information in question through modulation of a typically relatively low-frequent electromagnetic carrier wave. For this purpose, amplitude, frequency or phase modulation techniques can be used. Because the power supply for cards of this type which are designed to allow communication over a relatively large distance also occurs through the transmitter/receiver via an electromagnetic field, it would not be possible, within the current standards for permissible electromagnetic field strength, to include a microprocessor as used in a standardised chip card in said known types of cards and to make said modified cards still function properly at such larger distances, thereby to effect data encryption and decryption.

Still, for certain applications it is desired to have the possibility of contactless information transfer over a relatively great distance of some tens of centimetres, for instance 70 cm, while providing for a better protection of the information. One example is the use of a contactless card in public transport. It is further desired, with regard to these applications, that use can be made of infrastructure that exists already or can be realised within a relatively short period of time, so as to enable modification of the data stored in the memories of the contactless cards mentioned. The object of the invention is to meet this need.

In accordance with this invention a hybrid chip card is provided, having a chip including an integrated electronic circuit comprising at least a microprocessor and a memory, the chip being connected with contacts of the card for power supply and data communication with the external world according to standard ISO 7816 or with first means for power supply and data communication with the external world in a contactless manner at a very short distance under control of the microprocessor, or with both said contacts and said first means, said chip card being characterised in that said memory or memory part accommodating data information is accessible through said contacts and/or the first means for reading and writing at a very short distance and in that the memory further is accessible for reading through interface means provided on the chip and second means for contactless data communication with the external world and contactless transfer of supply power from the external world over a relatively large distance in the order of tens of centimetres, only part of the integrated electronic circuit being activated with low energy consumption during communication and power supply through the second means.

Hereinafter the invention will be described with reference to the accompanying single figure.

The figure schematically shows a responder card C. The card contains an electronic circuit 1 in the form of a chip comprising a microprocessor part 6 with integrated memory 8, the circuit being in contact with the external world in the standardised manner according to ISO 7816, through contacts 2, and/or in a contactless manner still to be standardised within ISO 10536 and symbolically indicated at 3 by means of a coil. The memory can contain the program for the microprocessor, which may or may not be modifiable, as well as data, which may or may not be modifiable. According to the invention, a part of the memory or the total integrated memory of the card is connected with a coil 4 or another antenna via a suitable interface 7 for that purpose, located in the same integrated circuit, so that the information of this memory or a part thereof can be transferred in a contactless manner to a transmitter/receiver that is located at a relatively great distance. During this transfer, the feeding energy for the part 7 of the electronic circuit that enables transfer is also transferred in contactless manner from the transmitter/receiver via the coil or the anntenna 4 to the card. Optionally, the coil can be connected to a capacitor 5, so that a tuned circuit is obtained, enabling more energy to be transferred within the current field strength standards. In this situation, therefore, the microprocessors used cannot function for the reasons mentioned, and encryption and decryption of the data, which may be encoded, cannot take place. If the hybrid card according to the invention is used as a debit card, i.e., prior to use an upgrading must take place, then this can be effected by applying the card to a terminal which is provided with an interface according to ISO 7816, i.e., with contacts, or to a terminal with a contactless interface 3 according to the new standard ISO 10536 yet to be established.

In such a terminal, the microprocessor in the card does become activated and data information can be written in the memory of the card through data encryption and decryption, for instance by one of the above-mentioned methods. Of course, it is also possible in this manner to write data information that has not been encrypted in the memory of the card. If the card is subsequently applied to a check or recognition system that functions at a greater distance, then part 7 of the electronic circuit in the card is activated and the data information of the memory 8 or of a part thereof is transferred in contactless manner via coil 4 to the receiver of this system.

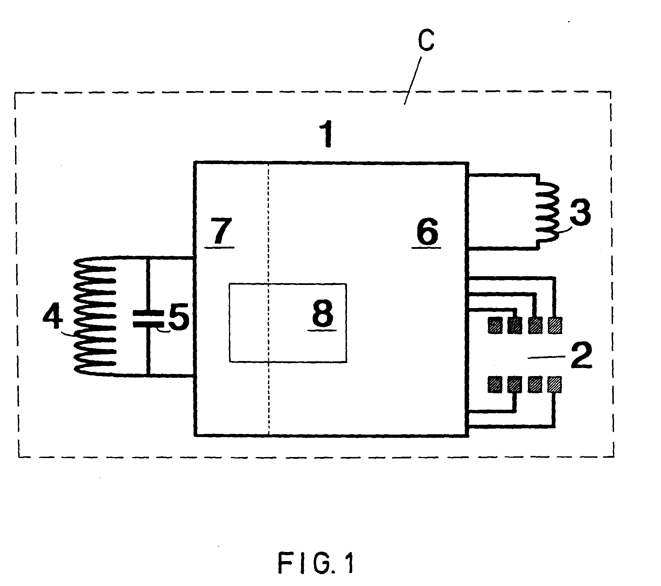

In principle, it is also possible to use the microprocessor or a part thereof for the transfer of data information over a greater distance. Since this data information transfer takes place at relatively low frequencies of, for instance, 120 kHz, in contrast to clock frequencies of, for instance, 5MHz with normal microprocessor fucntions, the microprocessor is then set in a so-called low power mode, in which the data information transfer occurs slowly and with little energy consumption. In the block diagram of Fig. 1, therefore, the microprocessor functions can also be divided between blocks 6 and 7. To provide for better separation between the memory parts of the memory 8 and to prevent interference between the functions "identification at a larger distance" and "smart card" at a very small distance, the memory can be designed as a so-called dual port memory, with the memory cell proper being accessible from two sides via separate electronic circuits, whilst these access circuits do not influence each other.

The memory of the chip card can consist of a so-called EEPROM (Electrical Erasable Programmable Read Only Memory), which is capable of saving the data information without the memory cell receiving electrical feed. In such a memory, as with programmable identification tags, data information can also be written in contactless manner. This, however, can only be done at a small distance of a few centimeters because it requires more energy than does reading out these memory cells.

## Claims

1. A hybrid chip card (C) having a chip including an integrated electronic circuit (1) comprising at least a microprocessor (6) and a memory (8) the chip being connected with contacts (2) of the card for power supply and data communication with the external world according to standard ISO 7816 or with first means (3) for power supply and data communication with the external world in a contactless manner at a very short distance under control of the microprocessor, or with both said contacts (2) and said first means (3) **characterized in that** said memory (8) or a memory part accommodating data information is accessible through said contacts (2) and/or the first means (3) for reading and writing at a very short distance and in that the memory (8) further is accessible for reading through interface means (7) provided on the chip and second means (4,5) for contactless data communication with the external world and contactless transfer of supply power from the external world over a relatively large distance in the order of tens of centimeters only a part of the integrated electronic circuit being activated with low energy consumption during communication and power supply through the second means.

2. A chip card as claimed in claim 1, **characterized in that**, for the data information transfer over a greater distance, the microprocessor (6), or a part thereof, present in the integrated electronic circuit (1) is arranged to be operational in a so-called low power mode, wherein the clock frequency of the microprocessor (1) is considerably reduced.

3. A chip card as claimed in one or both preceding claims, **characterized in that** the memory (8) or memory part accommodating data information is designed as a dual port memory.

4. A chip card as claimed in one or more of the preceding claims, **characterized in that** the memory (8), or a part thereof, is an EEPROM which can be read out at a low power supply voltage as transferred over a relatively large distance in a contactless manner and which can be written in a contactless manner at a high power supply voltage as transferred at a slighter distance in the order of a few centimeters.

## Patentansprüche

1. Hybrid-Chipkarte (C) mit einem Chip, der eine Integrierte elektronische Schaltung (1) mit wenigstens einem Mikroprozessor (6) und einem Speicher (8) aufweist, wobei der Chip mit Kontakten (2) der Karte zur Energieversorgung oder zur Datenkommunikation mit der Außenwelt gemäß der Norm ISO 7816 oder mit einer ersten Einrichtung (3) zur Energieversorgung oder zur Datenkommunikation mit der Außenwelt auf kontaktlose. Weise und über sehr kurze Distanz unter Steuerung durch den Mikroprozessor, oder mit sowohl den Kontakten (2), als auch der ersten Einrichtung (3) verbunden ist,
dadurch gekennzeichnet, daß
der Speicher (8) oder ein Dateninformationen aufnehmender Speicherbereich über die Kontakte (2) und/oder die erste Einrichtung (3) zum Lesen und Schreiben über eine sehr geringe Distanz zugängig ist und daß der Speicher (8) ferner zum Lesen durch eine auf dem Chip vorgesehene Interfaceeinrichtung (7) und eine zweite Einrichtung (4, 5) zur kontaktlosen Datenkommunikation mit der Außenwelt und zum kontaktlosen Übertragen von Energie aus der Außenwelt über eine relativ große Distanz in der Größenordnung von einigen zehn Zentimetern zugängig ist, wobei während der Kommunikation und der Energieversorgung über die zweite Einrichtung nur ein Teil der integrierten elektronischen Schaltung mit geringem Energieverbrauch aktiviert ist.

2. Chipkarte nach Anspruch 1, dadurch gekennzeichnet, daß zur Dateninformationsübertragung über eine größere Distanz der in der Integrierten elektronischen Schaltung (1) vorgesehene Mikroprozessor (6) oder ein Teil desselben in einem sogenannten Energiesparmodus betreibbar ist, indem die Taktfrequenz des Mikroprozessors (1) erheblich verringert ist.

3. Chipkarte nach einem oder beiden vorhergehenden Ansprüchen, dadurch gekennzeichnet, daß der Speicher (8) oder der Dateninformationen enthaltende Speicherbereich als Dualport-Speicher ausgebildet ist.

4. Chipkarte nach einem oder mehreren der vorhergehenden Ansprüche, dadurch gekennzeichnet, daß der Speicher (8) oder ein Teil desselben ein EEPROM ist, der mit einer über eine relativ große Distanz kontaktlos gelieferten geringen Versorgungsspannung ausgelesen und kontaktlos mit einer über eine geringere Distanz in der Größenordnung weniger Zentimeter gelieferten hohen Versorgungsspannung werden kann.

## Revendications

1. Carte à puce hybride (C) comportant une puce comprenant un circuit électronique intégré (1) comportant au moins un microprocesseur (6) et une mémoire (8), la puce étant reliée à des contacts (2) de la carte destinés à une alimentation et à des communications de données avec le monde extérieur conformément à la norme ISO 7816 ou à un premier moyen (3) destiné à une alimentation et à des communications de données avec le monde extérieur d'une manière sans contact à une distance très courte sous la commande du microprocesseur, ou à la fois auxdits contacts (2) et audit premier moyen (3), caractérisée en ce que ladite mémoire (8) ou qu'une partie de mémoire recevant des informations de données est accessible par l'intermédiaire desdits contacts (2) et/ou du premier moyen (3) en vue d'une lecture et d'une écriture à une distance très courte et en ce que la mémoire (8) est en outre accessible en vue d'une lecture par l'intermédiaire d'un moyen d'interface (7) disposé sur la puce et d'un second moyen (4, 5) destiné à des communications de données sans contact avec le monde extérieur et à un transfert sans contact d'une alimentation à partir du monde extérieur sur une distance relativement importante de l'ordre de dizaines de centimètres, seule une partie du circuit électronique intégré étant activée avec une faible consommation d'énergie durant les communications et l'alimentation par l'intermédiaire du second moyen.

2. Carte à puce selon la revendication 1, caractérisée en ce que, pour le transfert d'informations de données sur une distance plus importante, le microprocesseur (6), ou bien une partie de celui-ci, présent dans le circuit électronique intégré (1) est agencé pour être opérationnel dans ce que l'on appelle un mode à faible puissance, dans lequel la fréquence d'horloge du microprocesseur (1) est considérablement réduite.

3. Carte à puce selon l'une des revendications précédentes ou bien les deux, caractérisée on ce que la mémoire (8) ou bien une partie de mémoire recevant des informations de données est conçue sous forme d'une mémoire à deux accès.

4. Carte à puce selon l'une ou plusieurs des revendications précédentes, caractérisée en ce que la mémoire (8) ou bien une partie de celle-ci, est une mémoire morte programmable effaçable électriquement (EEPROM) qui peut être lue à une tension d'alimentation faible lorsqu'elle est transférée sur une distance relativement importante d'une manière sans contact et qui peut recevoir une écriture d'une manière sans contact à une tension d'alimentation élevée lorsqu'elle est transférée à une distance plus petite de l'ordre de quelques centimètres.
